# EUROPÄISCHE PATENTSCHRIFT

(11) **EP 2 912 287 B1**
(45) Veröffentlichungstag und Bekanntmachung des Hinweises auf die Patenterteilung: **16.11.2016**
(21) Anmeldenummer: 13774066.8
(22) Anmeldetag: 28.09.2013
(51) Int. Cl.: F01N 3/20, F01N 3/28, F01N 13/00

(54) **ABGASSYSTEM**
EXHAUST GAS SYSTEM
SYSTÈME DE GAZ D'ÉCHAPPEMENT

(30) Priorität: 26.10.2012 DE 102012021017
(43) Veröffentlichungstag der Anmeldung: 02.09.2015
(73) Patentinhaber: Daimler AG, 70327 Stuttgart (DE)
(72) Erfinder: BRAUN, Tillmann, 73663 Berglen (DE); KEPPELER, Berthold, 73277 Owen (DE); KOBIELA, Bernhard, 74399 Walheim (DE); MACKENSEN, Alexander, 71032 Böblingen (DE); PEPE, Antonio, 70195 Stuttgart (DE); SCHMIDT, Timo, 71111 Waldenbuch (DE); SCHRÖPEL, Michael, 71034 Böblingen (DE)
(74) Vertreter: JENSEN & SON
(86) Internationale Anmeldenummer: PCT/EP2013/002923
(87) Internationale Veröffentlichungsnummer: WO 2014/063772

(56) Entgegenhaltungen:
- EP-A1- 2 128 398
- WO-A1-2012/047159
- DE-A1-102011 120 685
- DE-U1-202007 010 324
- GB-A- 2 381 218
- US-A1- 2010 107 612

## Beschreibung

Die Erfindung betrifft ein Abgassystem zur Abgasführung und Abgasnachbehandlung in einem Kraftfahrzeug gemäß Oberbegriff des Anspruchs 1.

Abgassysteme der hier angesprochenen Art sind bekannt. Sie dienen zum einen der Abgasführung innerhalb eines Abgasstrangs einer Brennkraftmaschine und zum anderen einer Nachbehandlung des Abgases, insbesondere zur Reduzierung einer Partikel- und/oder Schadstoffkonzentration. Typischerweise werden insbesondere zur Reduktion von Stickoxiden im Ausgangszustand flüssige Reduktionsmittel wie Mineralölkraftstoff oder eine wässrige Harnstofflösung in das Abgassystem durchströmendes Abgas eingedüst. Um eine effiziente Reduktion von Schadstoffen und einem möglichst vollständige chemische Reaktion zu erhalten, ist es nötig, das Reduktionsmittel zu verdampfen und möglichst gleichmäßig in dem Abgasstrom zu verteilen. Im Fall der Verwendung wässriger Harnstofflösung muss der Harnstoff durch Hydrolyse und/oder Thermolyse zu Ammoniak umgesetzt werden, damit im Anschluss eine selektive katalytische Stickoxid-Reduktion durchgeführt werden kann.

Aus der europäischen Patentanmeldung EP 2 128 398 A1 ist ein Abgassystem bekannt, das ein erstes Abgasleitungselement mit einer Einlassöffnung und einer Auslassöffnung aufweist, wobei das erste Abgasleitungselement als Auslasstrichter eines Partikelfilters ausgebildet ist. Es ist ein zweites Abgasleitungselement vorgesehen, das ein Überströmrohr mit einer Längsachse und einer Mantelfläche aufweist. Dieses ragt in die Auslassöffnung des ersten Abgasleitungselements hinein und liegt mit seinem in die Auslassöffnung hineinragenden Ende dicht an einer Wandung des ersten Abgasleitungselements an, sodass das erste Ende geschlossen ist. In der Mantelfläche sind dem geschlossenen Ende benachbart eine Vielzahl von Einströmöffnungen vorgesehen, die als Rechteckspalte ausgebildet und regelmäßig - in Umfangsrichtung gesehen - über die Mantelfläche verteilt sind. Das Überströmrohr weist also entlang seines gesamten Umfangs dem ersten, geschlossenen Ende benachbarte Einströmöffnungen auf. Es ist mit seinem geschlossenen Ende und den Einströmöffnungen in dem ersten Abgasleitungselement aufgenommen, sodass in einer ersten Richtung durch die Einlassöffnungen einströmendes Abgas durch die Einströmöffnungen in das Überströmrohr einströmen kann. Das Abgas strömt dann - in Richtung des Längsachse des Überströmrohrs gesehen - in dem Überströmrohr durch die Auslassöffnung aus dem ersten Abgasleitungselement heraus. An dem ersten Abgasleitungselement ist eine Injektoreinheit zum Einbringen eines Reduktionsmittels in den Abgasstrom vorgesehen.

Dabei zeigt sich, dass die Längsachse des Überströmrohrs parallel zu der ersten Richtung angeordnet ist, in der Abgas durch die Einlassöffnung in das erste Abgasleitungselement einströmt. Um daher von der Einlassöffnung in das Überströmrohr und durch dieses durch die Auslassöffnung zu gelangen, muss das Abgas im Wesentlichen um 180° umgelenkt werden. Insbesondere muss das Abgas zunächst im Wesentlichen um 90° umgelenkt werden, um - von der Einlassöffnung ausgehend - in die Einströmöffnungen einströmen zu können. In dem Überströmrohr ergibt sich dann eine weitere Umlenkung im Wesentlichen um 90°. Auf diese Weise ist ein vergleichsweise verschlungener Strömungspfad für das Abgas ausgebildet, der mit einem Druckverlust einhergeht. Ein in dem Überströmrohr ausgebildeter Drall des Abgases, der zur Vermischung des eingedüsten Reduktionsmittels mit dem Abgas dient, weist eine reduzierte Drallzahl auf, weil das Abgas bereits durch die erste 90° Umlenkung von der Einlassöffnung zu den Einströmöffnungen kinetische Energie verloren hat. Es zeigt sich weiterhin, dass die Injektoreinheit so angeordnet ist, dass das Reduktionsmittel stromabwärts der Einströmöffnungen in das Überströmrohr eingedüst wird. Aus diesem Grund muss eine stromabwärts der Einströmöffnungen angeordnete Mischstrecke zur Verdampfung und Vermischung des Reduktionsmittels mit dem Abgas vergleichsweise lang ausgebildet sein, was sich nachteilig auf die Baulänge des zweiten Abgasleitungselements und damit auch insgesamt des Abgassystems auswirkt.

Weitere Abgassysteme sind aus den Druckschriften GB 2 381 218 A und US 2010107612 A1 bekannt.

Der Erfindung liegt daher die Aufgabe zugrunde, ein Abgassystem zu schaffen, welches eine erhöhte Drallzahl unter optimaler Ausnutzung der kinetischen Strömungsenergie des Abgases und eine vergleichsweise kompakte Bauform mit möglichst kurzer Mischstrecke aufweist.

Die Aufgabe wird gelöst, indem ein Abgassystem mit den Merkmalen des Anspruchs 1 geschaffen wird. Weitere bevorzugte Ausführungsformen werden in den abhängigen Ansprüchen definiert.

Dadurch, dass die Längsachse des Überströmrohrs im Wesentlichen senkrecht auf der ersten Richtung steht, in der das Abgas durch die Einlassöffnung in das erste Abgasleitungselement einströmt, ist es möglich, dass das einströmende Abgas ohne Umlenkung, insbesondere ohne 90°-Umlenkung, von der Einlassöffnung in die Einströmöffnung gelangt. Hierdurch wird ein Verlust an kinetischer Energie in der Abgasströmung weitestgehend vermieden, sodass sich beim Einströmen in das Überströmrohr ein Abgasdrall mit hoher Drallzahl einstellen kann. Dadurch, dass von der Injektoreinheit injiziertes Reduktionsmittel stromaufwärts der Einströmöffnung in das erste Abgasleitungselement eindüsbar ist, erfolgt eine - in Strömungsrichtung gesehen - frühe Eindüsung, sodass die Mischstrecke insbesondere in dem Überströmrohr optimal ausgenutzt werden kann. Zugleich verdampft das Reduktionsmittel vorzugsweise bereits zumindest zu einem Teil schon vor seinem Eintritt in das Überströmrohr. Zusammen mit dem hocheffizienten Drall mit hoher Drallzahl ergibt sich auf diese Weise eine schnelle Verdampfung und Durchmischung des Reduktionsmittels mit dem Abgas, wodurch auch eine Hydrolyse und/oder Thermolyse von Harnstoff beschleunigt wird. Die Mischstrecke selbst kann daher kürzer ausgebildet sein als bei dem bekannten Abgassystem, was sich vorteilhaft auf die Länge des zweiten Abgasleitungselements und damit auch des gesamten Abgassystems auswirkt.

Vorzugsweise schließt sich die Einströmöffnung unmittelbar an das geschlossene Ende des Überströmrohrs an, ist also - in Längsrichtung gesehen - nicht oder nur in sehr geringem Umfang von diesem beabstandet. Es ist allerdings möglich, dass die Einströmöffnung einen - im Vergleich zu ihrer Längserstreckung - kleinen Abstand zu dem geschlossenen Ende aufweist.

Das Überströmrohr ragt so in die Auslassöffnung hineinen, dass die Einströmöffnung vollständig in dem ersten Abgasleitungselement angeordnet ist. Dabei ist es so kurz wie möglich ausgebildet, es ragt also vorzugsweise nicht sehr viel weiter in das erste Abgasleitungselement hinein, als es einer Längserstreckung der Einströmöffnung entspricht. Hieraus folgt auch, dass ein - in Längsrichtung gemessener - Abstand von dem geschlossenen Ende des Überströmrohrs zu der Einströmöffnung so klein wie möglich ausgebildet ist, um die in das erste Abgasleitungselement ragende Länge des Überströmrohrs nicht unnötig auszudehnen und Totzonen für die Abgasströmung zu vermeiden.

Das Überströmrohr ist vorzugsweise formschlüssig in der Auslassöffnung aufgenommen. Ein Rand der Auslassöffnung umgibt demnach das Überströmrohr konturgerecht beziehungsweise formnegativ passgenau und bevorzugt dichtend, sodass kein Abgas zwischen einem Rand der Auslassöffnung und der Mantelfläche des Überströmrohrs aus dem ersten Abgasleitungselement entweichen kann. Besonders bevorzugt ist das Überströmrohr zusätzlich stoffschlüssig mit dem ersten Abgasleitungselement im Bereich der Auslassöffnung verbunden, vorzugsweise verschweißt. Auf diese Weise ergibt sich eine besonders dichte Verbindung. Das gesamte Abgas, was durch die Einlassöffnung in das erste Abgasleitungselement einströmt, muss daher über die Einströmöffnung und durch das Überströmrohr aus dem ersten Abgasleitungselement ausströmen, weil sich kein anderer Strömungspfad aus diesem heraus ergibt.

Mithilfe der Injektoreinheit wird vorzugsweise eine wässrige Harnstofflösung in den Abgasstrom eingedüst, wobei der Harnstoff in der Mischstrecke durch Hydrolyse und/oder Thermolyse zu Ammoniak umgesetzt wird. Im Anschluss an die Mischstrecke ist in diesem Fall vorzugsweise ein katalytisch wirksames Element, insbesondere ein Katalysator zur Durchführung einer selektiven katalytischen Reduktion vorgesehen, welcher Stickoxide mit dem Ammoniak zu elementarem Stickstoff und Wasser umsetzt. Es ist allerdings bei einem Ausführungsbeispiel des Abgassystems auch möglich, dass mithilfe der Injektoreinheit ein anderes, vorzugsweise im Ausgangszustand flüssiges Reduktionsmittel, wie beispielsweise ein Mineralölkraftstoff, in den Abgasstrom eingedüst wird.

Es wird ein Abgassystem bevorzugt, das sich dadurch auszeichnet, dass das Überströmrohr zumindest im Bereich der Einströmöffnung zylindrisch ausgebildet ist. Vorzugsweise umfasst die zylindrische Geometrie eine ovale Grundfläche, sodass das Überströmrohr - im Querschnitt gesehen - oval ausgebildet ist. Durch die bevorzugt mittig angeordnete Einströmöffnung in das ovale Überströmrohr einströmendes Abgas bildet einen Doppelwirbel aus, durch den eine besonders effiziente Durchmischung des in den Abgasstrom eingedüsten Reduktionsmittels bewirkbar ist. Bevorzugt ist die Geometrie des Überströmrohrs so gewählt, dass sie zwei gegenläufige Abgasströmungswirbel mit - im Querschnitt gesehen - annähernd kreisförmigem Verlauf ausbilden. In diesem Fall sind die Wirbel besonders stabil. Sie bleiben also vorzugsweise auch über eine gesamte Länge der Mischstrecke erhalten.

Bei einem anderen Ausführungsbeispiel ist es möglich, dass das Überströmrohr eine Querschnittsform aufweist, die zwei aneinandergesetzten Kreissegmenten entspricht. Auch in diesem Fall ist es insbesondere dann, wenn die Einströmöffnung mittig angeordnet ist, möglich, in dem Überströmrohr einen stabilen Doppelwirbel auszubilden, der über eine Länge der gesamten Mischstrecke erhalten bleibt. Die Länge der Mischstrecke beträgt vorzugsweise von mindestens 200 mm bis zu 300 mm oder auch mehr.

Bei wieder einem anderen Ausführungsbeispiel ist es möglich, dass das Überströmrohr zylindrisch mit kreisförmiger Grundfläche ausgebildet ist. In diesem Fall ist die Einströmöffnung vorzugsweise außermittig und insbesondere so angeordnet, dass das Abgas tangential in das Überströmrohr einströmt. Es bildet sich dann ein stabiler Einfachwirbel aus, wodurch ebenfalls eine gute Durchmischung des Reduktionsmittels mit dem Abgas erreicht wird.

Ist das Überströmrohr - im Querschnitt gesehen - oval ausgebildet, beträgt ein Verhältnis einer längeren Querschnittsachse zu einer kürzeren Querschnittsachse von mindestens 1,5 bis höchstens 2. Wird das Abgassystem in Zusammenhang mit einer Brennkraftmaschine eines Kraftfahrzeugs verwendet, deren Hubraum im Bereich von etwa 1,6 Liter bis 3,5 Liter liegt, beträgt die Länge der kürzeren Querschnittsachse vorzugsweise von mindestens 30 mm bis höchstens 100 mm. Selbstverständlich sind Ausführungsbeispiele mit abweichenden Maßen beziehungsweise Verhältnissen möglich.

Es wird auch ein Abgassystem bevorzugt, dass sich dadurch auszeichnet, dass das Überströmrohr nur eine Einströmöffnung aufweist. Diese ist der Einlassöffnung des ersten Abgasleitungselements abgewandt angeordnet, sodass das durch die Einlassöffnung einströmende Abgas zunächst um das Überströmrohr herumströmen muss, bevor es dann gleichsam entgegen der Einlassrichtung durch die Einströmöffnung in das Überströmrohr einströmen kann. Durch das Umströmen des Überströmrohrs erhält das Abgas bereits einen Drall und strömt mit einer tangentialen Geschwindigkeitskomponente in das Überströmrohr ein. Besonders bevorzugt wird das Überströmrohr beidseitig von dem Abgasstrom umströmt, der insoweit aufgeteilt wird in zwei Teilströme, die - in Strömungsrichtung gesehen - rechts und links an dem Überströmrohr vorbeiströmen und sich hinter diesem im Bereich der Einströmöffnung treffen. Die in das Überströmrohr gelangenden Teilströme weisen so in entgegengesetzte Richtungen zeigende, tangentiale Geschwindigkeitskomponenten auf, sodass ein sehr stabiler Doppelwirbel in besonders effizienter Weise und mit hoher Drallzahl ausgebildet wird.

Dabei ist vorzugsweise eine Wandung des ersten Abgasleitungselements im Bereich des geschlossenen Endes des zweiten Abgasleitungselements so nach innen gekrümmt, dass sie dicht mit dem geschlossenen Ende abschließt. Auf diese Weise wird verhindert, dass Abgas über das geschlossene Ende des Überströmrohrs hinüberströmen und auf diesem Weg zu der Einströmöffnung gelangen kann. Der gesamte Abgasstrom muss daher um das Überströmrohr herum zu der Einströmöffnung strömen, was die Stabilität und Drallzahl des gebildeten Wirbels, insbesondere des Doppelwirbels, erhöht.

Die Einströmöffnung weist vorzugsweise in Richtung der Längsachse des Überströmrohrs eine größere Ausdehnung auf als quer zu dieser. Sie ist also - in Längsrichtung gesehen - langgestreckt ausgebildet, wobei das Verhältnis einer Längsausdehnung zu einer Querausdehnung der Einströmöffnung vorzugsweise von mindestens 1,5 bis höchstens 4 beträgt. Besonders bevorzugt ist die Einströmöffnung als Spalt mit im Wesentlichen rechteckförmiger Durchtrittsfläche ausgebildet. Dabei beträgt das Verhältnis der langen Seite des Rechtecks zu der kurzen Seite des Rechtecks vorzugsweise von mindestens 1,5 bis höchstens 4. Es ist möglich, dass die im Wesentlichen rechteckförmige Durchtrittsfläche im Bereich der Ecken abgerundet ist. Insbesondere die Form eines Rechteckspalts für die Einströmöffnung ermöglicht eine besonders stabile Ausbildung eines Doppelwirbels der Abgasströmung in dem Überströmrohr.

Die Einströmöffnung erstreckt sich bevorzugt über die gesamte Länge des in das erste Abgasleitungselements hineinragenden Überströmrohrs, also von einer Innenseite der Auslassöffnung bis zu dem geschlossenen Ende. Die kürzere Querabmessung der Einströmöffnung ist vorzugsweise kleiner als die kürzere Querschnittsachse des ovalen Überströmrohrs ausgebildet.

Es wird auch ein Abgassystem bevorzugt, das sich dadurch auszeichnet, dass das erste Abgasleitungselement als Auslasstrichter eines Oxidationskatalysators ausgebildet ist. Besonders bevorzugt überkappt quasi die Einlassöffnung eine Auslassseite des Oxidationskatalysators, sodass das erste Abgasleitungselement als Abgassammelelement an einem Ausgang des Oxidationskatalysators angeordnet ist. Damit ist das Abgassystem insgesamt bevorzugt so ausgebildet, dass das Überströmrohr in den Auslasstrichter des Oxidationskatalysators hineinragt. Damit ist auch die durch die Injektoreinheit und das Überströmrohr ausgebildete Mischeinrichtung unmittelbar stromabwärts des Oxidationskatalysators angeordnet, bevorzugt an diesen angeflanscht.

In diesem Zusammenhang wird auch ein Abgassystem bevorzugt, bei welchem das erste Abgasleitungselement hutzenförmig ausgebildet ist. Dabei ist eine durch die Einlassöffnung definierte, gedankliche Ebene, nämlich eine gedankliche Ebene, auf der die Strömungsrichtung des Abgases durch die Einlassöffnung senkrecht steht, im Wesentlichen senkrecht zu einer durch die Auslassöffnung definierten, gedanklichen Ebene, nämlich einer gedanklichen Ebene, auf der die Abgasströmung durch die Auslassöffnung senkrecht steht, im Wesentlichen, vorzugsweise genau senkrecht orientiert. Von der Einlassöffnung zu der Auslassöffnung findet also eine Umleitung des Abgasstroms um im Wesentlichen, vorzugsweise genau 90° statt. Das erste Abgasleitungselement überkappt dabei das in es hineinragende Überströmrohr. Damit hat die Anordnung aus dem ersten Abgasleitungselement und dem zweiten Abgasleitungselement insgesamt quasi die Form einer Windhutze. Die 90°-Umlenkung des Abgasstroms geschieht im Wesentlichen beim Einströmen des Abgases in das Überstömrohr, wo es von der Einströmöffnung ausgehend gegen eine gegenüberliegend angeordnete Wandung des Überströmrohres prallt, wobei zum einen der Wirbel, insbesondere Doppelwirbel ausgebildet wird, und wobei zum anderen die Abgasströmung um 90° umgelenkt wird, weil das Überströmrohr an seinem in das erste Abgasleitungselement hineinragenden, ersten Ende geschlossen ist.

Es wird ein Abgassystem bevorzugt, das sich dadurch auszeichnet, dass das erste Abgasleitungselement einen - in der ersten Richtung gesehen - in Bezug auf das Überströmrohr der Einlassöffnung abgewandten, vor der Einströmöffnung angeordneten Strömungsraum aufweist. Dies bedeutet, dass - in Strömungsrichtung des Abgases von der Einlassöffnung her gesehen - hinter dem Überströmrohr ein Strömungsraum angeordnet ist, in dem sich das Abgas, welches das Überströmrohr umströmt, vor der der Einlassöffnung abgewandten Einströmöffnung sammelt, bevor es durch diese in das Überströmrohr eintritt. Die Injektoreinheit ist so angeordnet und ausgerichtet, dass ein Injektionsstrahl derselben in diesen Strömungsraum gerichtet ist. Dabei ist mit dem Begriff "Injektionsstrahl" einerseits das von der Injektoreinheit eingedüste Reduktionsmittel und andererseits die Abstrahlcharakteristik der Injektoreinheit angesprochen, wobei die Abstrahlcharakteristik im Wesentlichen kegelförmig ausgestaltet ist. Der abgestrahlte Kegel von Reduktionsmittel öffnet sich dabei in einer von der Injektoreinheit weg weisenden Richtung. Der Injektionsstrahl, insbesondere eine Längsachse des Abstrahlkegels, ist vorzugsweise annähernd parallel, höchstens spitzwinklig zu der Längsachse des Überströmrohrs orientiert und besonders bevorzugt von der Einströmöffnung weg ausgerichtet. Dabei ist die Injektoreinheit vorzugsweise in enger räumlicher Nähe zu dem geschlossenen Ende des Überströmrohrs an dem ersten Abgasleitungselement befestigt, sodass der Injektionsstrahl von einem nah an dem geschlossenen Ende angeordneten Bereich ausgeht und sich mit vorzugsweise kleinem, spitzen Winkel entlang seiner Propagationsrichtung von der Einströmöffnung beziehungsweise dem Überströmrohr entfernt.

Vorzugsweise ist die Injektoreinheit so ausgebildet, dass sie eine Mehrzahl von Abstrahlkegeln, besonders bevorzugt zwei Abstrahlkegel in den Strömungsraum eindüst, wobei die Abstrahlkegel in einer Richtung, die senkrecht auf der Längsrichtung des Überströmrohrs und parallel zu der ersten Richtung orientiert ist, hintereinander angeordnet sind. Dabei weist vorzugsweise die Längsachse des - von dem Überströmrohr aus in der ersten Richtung gesehen - hinteren Abstrahlkegels einen größeren Winkel zu der Längsachse des Überströmrohrs auf als ein entsprechend vorderer Abstrahlkegel.

Jedenfalls wird das Reduktionsmittel stromaufwärts der Einströmöffnung in den von dem ersten Abgasleitungselement gebildeten Strömungsraum eingedüst, also an einer Stelle mit dem Abgasstrom vermischt, an dem dieser noch nicht in das Überströmrohr und damit in das zweite Abgasleitungselement eingetreten ist. Hierdurch findet eine vergleichsweise frühe Vermischung des Reduktionsmittels mit dem heißen, aus dem Oxidationskatalysator kommenden Abgas statt. Dies fördert eine Verdampfung des Reduktionsmittels, das zudem besonders effizient mit dem in das Überströmrohr einströmenden, einen Drall, vorzugsweise eine Doppeldrall bildenden Abgas vermischt wird. Hierdurch kann die Mischstrecke verkürzt werden, und es erfolgt eine besonders homogene Durchmischung, was insbesondere durch Ausbildung eines Doppelwirbels weiter unterstützt wird. Dabei erweist sich auch insbesondere die Eindüsung unmittelbar vor der Einströmöffnung als günstig, weil hier eine intensive, schnelle Abgasströmung in das Überströmrohr gegeben ist, die das Reduktionsmittel mitreißt, verwirbelt und verdampft.

Es wird auch ein Abgassystem bevorzugt, das sich dadurch auszeichnet, das in dem Strömungsraum mindestens ein im Wesentlichen plattenförmiges Prallelement vorgesehen ist, das an dem Überströmrohr und/oder an dem ersten Abgasleitungselement befestigt ist. Vorzugsweise ist das Prallelement mit dem Überströmrohr und/oder dem ersten Abgasleitungselement verschweißt. Dabei ist es möglich, dass das Prallelement ausschließlich an dem Überströmrohr befestigt, vorzugsweise mit diesem verschweißt ist. Es ist auch möglich, dass das Prallelement ausschließlich an dem ersten Abgasleitungselement befestigt, vorzugsweise mit diesem verschweißt ist. Schließlich ist es möglich, dass das Prallelement sowohl an dem Überströmrohr als auch an dem ersten Abgasleitungselement befestigt, vorzugsweise mit diesen verschweißt ist. Das Prallelement weist eine der Injektoreinheit zugewandte Prallfläche auf, deren Normalenvektor im Wesentlichen parallel, vorzugsweise genau parallel zu der Längsachse des Überströmrohrs ausgerichtet ist. Dabei übergreift das Prallelement vorzugsweise die Einströmöffnung entlang einer Richtung, die quer, vorzugsweise senkrecht zu der Längsachse des Überströmrohrs orientiert ist. Das vorzugsweise als Prallplatte ausgebildete Prallelement ist nach allem so in dem Strömungsraum angeordnet, dass es zumindest bereichsweise von dem mindestens einen Injektionsstrahl getroffen wird. Auf das Prallelement auftreffendes Reduktionsmittel prallt bevorzugt von diesem ab, wobei die abprallenden Tropfen in kleinere Tropfen zerplatzen und hierdurch schneller verdampfen.

Durch den Wandkontakt mit einer Wandung des Überströmrohrs und/oder einer Wandung des Abgasleitungselements, an denen es vorzugsweise befestigt ist, wird das Prallelement durch Wärmeleitung geheizt. Es wird außerdem durch das vorbeiströmende Abgas geheizt. Somit wirkt das Prallelement als Verdampfungselement, durch das Verdampfungswärme an das auftreffende Reduktionsmittel abgegeben wird. Auch eine separate Beheizung des mindestens einen Prallelements ist möglich. Ebenfalls weist das Prallelement vorzugsweise eine Temperatur oberhalb einer Leidenfrost-Temperatur des Reduktionsmittels auf. Hierdurch sind eine effiziente Verdampfung und auch ein effizienter Abprall von Reduktionsmittel-Tropfen auf dem Prallelement gewährleistet.

Vorzugsweise trifft der Injektionsstrahl auch auf eine Wandung des ersten Abgasleitungselements. Auch hier prallen bevorzugt Tropfen ab beziehungsweise wird Reduktionsmittel an der heißen Wandung verdampft.

Um die Verdampfung auf der Prallfläche des Prallelements zu unterstützen, kann diese eine Oberflächenformung aufweisen, die vorzugsweise Noppen umfasst. Alternativ oder zusätzlich können eine Aufrauung und/oder eine Beschichtung vorgesehen sein. Ein bevorzugter Wert für eine Oberflächenrauhigkeit liegt im Bereich von mindestens 5 µm bis höchstens 50 µm. Als Beschichtung kann bevorzugt eine katalytische Beschichtung vorgesehen sein, welche eine Thermolyse und/oder Hydrolyse von Harnstoff unterstützt. Es ist auch möglich, eine Beschichtung vorzusehen, welche zusätzlich oder alternativ einer Belagbildung insbesondere durch Ablagerungen von Harnstoff-Zersetzungsprodukten entgegenwirkt. Die Beschichtung der Prallfläche umfasst vorzugsweise Titandioxid, besonders bevorzugt besteht sie aus Titandioxid.

Dadurch, dass das Reduktionsmittel bereits durch den Kontakt mit dem mindestens einen Prallelement und/oder mit der Wandung des ersten Abgasleitungselements noch vor Eintritt in die Einströmöffnung des Überströmrohrs zumindest teilweise verdampft und/oder einer Hydrolyse beziehungsweise Thermolyse zugeführt wird, wird die Effizienz der Mischstrecke deutlich erhöht. Diese kann daher verkürzt werden, wodurch das Abgassystem eine besonders kompakte Form aufweisen kann.

Das mindestens eine Prallelement und/oder die Injektoreinheit sind vorzugsweise so relativ zueinander angeordnet, dass der Injektionsstrahl mit einem Auftreffwinkel von vorzugsweise weniger als 45° relativ zu einem Normalenvektor auf die Prallfläche auftrifft. Besonders bevorzugt wird das Reduktionsmittel derart eingedüst, dass es wenigstens annähernd senkrecht auf die Prallfläche auftrifft, wodurch eine besonders gute Benetzung derselben erreicht wird.

Das mindestens eine Prallelement ist bevorzugt auch im Wesentlichen parallel zu der das Überströmrohr umströmenden und in die Einströmöffnung einströmenden Abgasströmung ausgerichtet. Damit bildet das mindestens eine Prallelement einen minimalen Strömungswiderstand für das Abgas, sodass ein Druckverlust im Bereich des Prallelements minimiert oder vermieden wird, und wodurch eine Verdampfung, Wechselwirkung und Durchmischung des Reduktionsmittels im Bereich des Prallelements mit dem Abgas intensiviert wird.

Es wird auch ein Abgassystem bevorzugt, das sich dadurch auszeichnet, dass eine Mehrzahl von Prallelementen vorgesehen ist. Besonders bevorzugt sind mindestens drei, vorzugsweise bis zu acht Prallelemente vorgesehen. Vorzugsweise sind die Prallelemente - in Richtung der Längsachse des Überströmrohrs gesehen - hintereinander sowie vorzugsweise bezüglich ihrer Prallflächen parallel zueinander angeordnet. Die Normalenvektoren der Prallflächen weisen demnach vorzugsweise zumindest annähernd in die gleiche Richtung. Hierdurch ist es insbesondere möglich, dass ein Mehrfachabprall von Tropfen des Reduktionsmittels an verschiedenen Prallelementen stattfindet, wobei ein Tropfen bei jedem Abprall in kleinere Tropfen zerplatzt, sodass die Verdampfung des Reduktionsmittels erheblich beschleunigt wird.

In diesem Zusammenhang wird auch ein Abgassystem bevorzugt, das sich dadurch auszeichnet, dass die Prallelemente jeweils eine Aussparung in der Prallfläche aufweisen. Diese ist vorzugsweise so angeordnet, dass der Injektionsstrahl bereichsweise auf die Aussparung gerichtet ist. Dies bedeutet, dass ein Teil des von der Injektoreinheit abgestrahlten Reduktionsmittels durch die Aussparung tritt, während ein anderer Teil auf die die Aussparung umgebende Prallfläche auftrifft, sodass der Injektionsstrahl letztlich durch die Prallelemente abgeschält wird. Hierbei kommt es zu einer Wirbelbildung an den Kanten der Aussparungen, was die Vermischung des Reduktionsmittels mit dem Abgas und die Verdampfung desselben weiter verbessert.

In diesem Zusammenhang wird ein Abgassystem bevorzugt, das sich dadurch auszeichnet, dass von den Aussparungen der Prallelemente definierte Durchtrittsflächen - in Richtung des Injektionsstrahls gesehen - entlang einer Abfolge der Prallelemente abnehmen. Die Aussparungen weisen Durchtrittsflächen für das Reduktionsmittel auf, wobei die Durchtrittsfläche jeder Aussparung eines Prallelements von Prallelement zu Prallelement - in Richtung des Injektionsstrahls gesehen - abnimmt. Hierdurch wird der Injektionsstrahl von Prallelement zu Prallelement stärker abgeschält, was die Wirbelbildung an den Kanten, das Abprallverhalten, das Verdampfungsverhalten, damit die Hydrolyse und/oder Thermolyse und schließlich die Vermischung des Reduktionsmittels mit dem Abgas verbessert. Dabei nimmt bevorzugt eine - in einer Richtung senkrecht zu einer durch die Einströmöffnung definierten Ebene gemessene - Tiefe der Aussparungen von Prallelement zu Prallelement ab. Zusätzlich oder alternativ ist vorzugsweise vorgesehen, dass auch eine - senkrecht zu der Tiefe gemessene - Breite der Aussparungen von Prallelement zu Prallelement abnimmt. Bei einem besonders bevorzugten Ausführungsbeispiel nehmen sowohl die Tiefe als auch die Breite der Aussparungen - in Richtung des Injektionsstrahls gesehen - entlang der Abfolge der Prallelemente ab.

Es wird auch ein Abgassystem bevorzugt, das sich dadurch auszeichnet, dass die Injektoreinheit so angeordnet und ausgerichtet ist, dass der Injektionsstrahl in Bezug auf eine durch die erste Richtung und durch die Längsrichtung definierte Symmetrieebene, welche die Einströmöffnung symmetrisch teilt, symmetrisch angeordnet ist. Die Symmetrieebene ist demnach dadurch bestimmt, dass in ihr sowohl die erste Richtung, also die Strömungsrichtung des Abgases durch die Einlassöffnung, und die Längsrichtung des Überströmrohrs liegen. Die Lage der Symmetrieebene ist weiter dadurch definiert, dass sie die Einströmöffnung symmetrisch in zwei gleich große Halbflächen teilt. Die Injektoreinheit ist nun so angeordnet und ausgerichtet, dass auch der Injektionsstrahl vorzugsweise zu dieser Symmetrieebene spiegelsymmetrisch angeordnet ist.

In diesem Zusammenhang wird auch bevorzugt, dass das mindestens eine Prallelement, vorzugsweise alle Prallelemente, in Bezug auf die Symmetrieebene spiegelsymmetrisch ausgebildet und angeordnet sind. Damit resultiert eine insgesamt spiegelsymmetrische Anordnung der Geometrie des vorzugsweise ovalen Überströmrohrs, der Injektoreinheit, des Injektionsstrahls und der Prallelemente. Insbesondere wenn das Überströmrohr oval ausgebildet ist, resultiert ein bezüglich der Symmetrieebene spiegelsymmetrischer Doppelwirbel, wobei sich aufgrund der ebenfalls symmetrisch angeordneten Injektoreinheit, dem symmetrischen Injektionsstrahl und den symmetrischen Prallelementen eine besonders homogene, gleichmäßige Verteilung des Reduktionsmittels in dem symmetrischen Doppelwirbel ergibt. Damit ist sichergestellt, dass das Reduktionsmittel in dem gesamten Abgasstrom homogen verteilt wird, sodass eine Schadstoffkonzentration weitestgehend reduziert werden kann.

Es wird auch ein Abgassystem bevorzugt, bei dem die der Einlassöffnung abgewandte Einströmöffnung als Haupteinströmöffnung ausgebildet ist, die vorzugsweise in Richtung der Längsachse des Überströmrohrs eine größere Ausdehnung aufweist als quer zu dieser, wobei sie besonders bevorzugt als spalt- und im Wesentlichen rechteckförmige Durchtrittsfläche ausgebildet ist, und wobei weiterhin mindestens eine Nebeneinströmöffnung in der Mantelfläche des Überströmrohrs vorgesehen ist, die - entlang der ersten Richtung gesehen - vorzugsweise seitlich zu der Haupteinströmöffnung angeordnet ist. Die Nebeneinströmöffnung weist bevorzugt einen geringeren Durchtrittsquerschnitt auf als die Haupteinströmöffnung. Dabei weist sie vorzugsweise in Richtung der Längsachse des Überströmrohrs eine größere Ausdehnung als quer zu dieser auf. Besonders bevorzugt ist sie als Spalt mit rechteckförmiger Durchtrittsfläche ausgebildet. Besonders bevorzugt sind sowohl die Haupteinströmöffnung als auch die mindestens eine Nebeneinströmöffnung als Rechteckspalt ausgebildet, wobei jedoch die Nebeneinströmöffnung vorzugsweise eine geringere Durchtrittsfläche aufweist als die Haupteinströmöffnung. Durch die seitliche Anordnung der Nebeneinströmöffnung kann seitlich an dem Überströmrohr vorbeiströmendes Abgas in das Überströmrohr gelangen. Hierdurch wird ein Druckverlust des Abgases beim Umströmen des Überströmrohrs gesenkt, wodurch auch eine - in Längsrichtung gemessene - Bauhöhe und eine - in Querrichtung gemessene - Baubreite der um das Überströmrohr herumführenden Strömungskanäle reduziert werden können. Das Abgassystem wird dadurch kompakter. Die Nebeneinströmöffnung unterstützt zudem die Ausbildung des Dralls, insbesondere wenn das Abgas durch sie möglichst tangential in das Überströmrohr eintritt.

Besonders wird ein Abgassystem bevorzugt, welches zwei Nebeneinströmöffnungen aufweist, die in Bezug auf eine durch die erste Richtung und die Längsachse definierte, die Haupteinströmöffnung symmetrisch teilende Symmetrieebene, welche der zuvor definierten Symmetrieebene entspricht, spiegelsymmetrisch angeordnet sind. Es sind also - in Strömungsrichtung des Abgases durch die Einlassöffnung gesehen - links und rechts an der Mantelfläche des Überströmrohrs Nebeneinströmöffnungen vorgesehen, durch die das Überströmrohr umströmendes Abgas in dieses eintreten kann. Auf diese Weise wird der mit der Umströmung verbundene Druckverlust besonders effizient gesenkt, was weiterhin eine zusätzliche Reduktion der Bauhöhe und Baubreite der um das Überströmrohr herumführenden Strömungskanäle ermöglicht.

Bevorzugt strömt ein größerer Teil des Abgasstroms weiterhin vollständig um das Überströmrohr herum und tritt durch die Haupteinströmöffnung in dieses ein. Ein vorzugsweise geringerer Teil des Abgasstroms strömt seitlich durch die Nebeneinströmöffnungen ein, wo er die Ausbildung des Wirbels, insbesondere des Doppelwirbels unterstützt.

Im Übrigen sind für die Haupteinströmöffnung vorzugsweise alle Merkmale einschließlich des in diesem Bereich vorzugsweise vorgesehenen mindestens einen Prallelements verwirklicht, die zuvor für die Einströmöffnung, insbesondere für die einzige Einströmöffnung beschrieben wurden. Das hier beschriebene Ausführungsbeispiel unterscheidet sich von den zuvor beschriebenen Ausführungsbeispielen demnach bevorzugt ausschließlich insoweit, als zusätzlich mindestens eine Nebeneinströmöffnung, vorzugsweise zwei Nebeneinströmöffnungen vorgesehen ist/sind.

Bevorzugt wird ein Abgassystem, bei welchem die mindestens eine Nebeneinströmöffnung mindestens ein Strömungsleitelement aufweist, durch welches das Abgas im Wesentlich tangential in das Überströmrohr leitbar ist. Hierdurch wird in besonders günstiger Weise die Ausbildung des Dralls, insbesondere des Doppelwirbels unterstützt, weil das Abgas durch die mindestens eine Nebeneinströmöffnung tangential in das Überströmrohr geführt wird und insoweit eine tangentiale Geschwindigkeitskomponente erhält. Dabei ist das Strömungsleitelement vorzugsweise als - in radialer Richtung gesehen, also in einer Richtung, die senkrecht auf der Längsrichtung steht - nach außen und/oder nach innen umgebogener Bereich der Mantelfläche des Überströmrohrs ausgebildet. Besonders bevorzug sind sowohl ein nach außen als auch ein nach innen umgebogener Bereich der Mantelfläche entlang der gesamten Längserstreckung der Nebeneinströmöffnung vorgesehen, wodurch sich eine besonders günstige Strömungsleitung in tangentialer Richtung ergibt.

Aufgrund der sehr effizienten Vermischung und auch Verdampfung des Reduktionsmittels im Bereich der Einströmöffnung und des Überströmrohrs kann auf einen separaten Mischer zur Verteilung des in das Abgas eingedüsten Reduktionsmittels verzichtet werden. Hierdurch wird auch ein sonst durch den Mischer verursachter Druckverlust vermieden, was insgesamt für das Abgassystem und insbesondere nachgelagerte Abgasnachbehandlungselemente vorteilhaft ist.

Vorzugsweise ist die gesamte geometrische Ausgestaltung des Abgassystems, insbesondere die Querschnittsabmessungen des Überströmrohrs und die Abmessungen der Einströmöffnung so gewählt, dass für den Abgasdrall in dem Überströmrohr eine Drallzahl von wenigstens 0,3 bezogen auf jeden Einzelwirbel des Doppelwirbels erreicht wird. Insbesondere ist die Geometrie des Abgassystems in Abhängigkeit eines Hubraums der Brennkraftmaschine so ausgeführt, dass eine Einlassdrallzahl von mindestens 0,3 erreicht wird.

Die Erfindung wird im Folgenden anhand der Zeichnung näher erläutert. Dabei zeigen:
- Figur 1: eine schematische Längsschnittdarstellung eines ersten Ausführungsbeispiels eines Abgassystems;
- Figur 2: eine vergrößerte Detaildarstellung des Abgassystems gemäß Figur 1;
- Figur 3: eine teilweise aufgeschnittene, dreidimensionale Darstellung des Ausführungsbeispiels eines Abgassystems gemäß den Figuren 1 und 2, und
- Figur 4: eine teilweise aufgeschnittene, dreidimensionale Darstellung eins zweiten Ausführungsbeispiels eines Abgassystems.

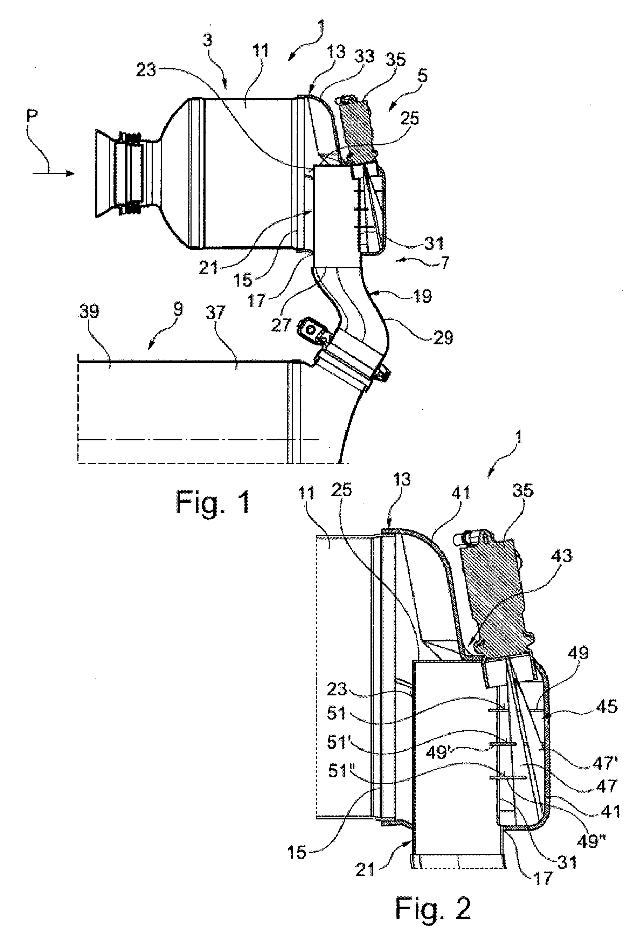

Figur 1 zeigt eine schematische Längsschnittdarstellung eines ersten Ausführungsbeispiels eines Abgassystems 1. Dieses dient der Abgasführung und Abgasnachbehandlung in einem Kraftfahrzeug. Es umfasst ein erstes Abgasnachbehandlungselement 3, eine Mischeinrichtung 5, mittels derer ein Reduktionsmittel mit dem Abgasstrom vermischt wird, wobei die Mischeinrichtung 5 eine Mischstrecke 7 aufweist, und ein zweites Abgasnachbehandlungselement 9.

Abgas strömt in Richtung eines Pfeils P von einer Brennkraftmaschine kommend in das erste Abgasnachbehandlungselement 3 ein. Es durchströmt dieses und gelangt so zu der Mischeinrichtung 5, wo es mit dem Reduktionsmittel vermischt wird. Die Vermischung und Homogenisierung wird entlang der Mischstrecke 7 intensiviert, bis das Abgas schließlich in das zweite Abgasnachbehandlungselement 9 eintritt. Dieses verlässt es wiederum in Richtung auf ein nicht dargestelltes Auspuffrohr hin. Dabei ist keinesfalls ausgeschlossen, dass sich an das zweite Abgasnachbehandlungselement 9 weitere Abgasnachbehandlungselemente anschließen. Ebenso wenig ist es ausgeschlossen, dass - in Strömungsrichtung des Abgases gesehen - vor dem ersten Abgasnachbehandlungselement 3 weitere Abgasnachbehandlungselemente vorgesehen sind.

Das erste Abgasnachbehandlungselement 3 ist hier als Oxidationskatalysator 11, besonders bevorzugt als Diesel-Oxidationskatalysator ausgebildet.

Das Abgassystem 1, insbesondere die Mischeinrichtung 5, umfasst ein erstes Abgasleitungselement 13, das eine Einlassöffnung 15 und eine Auslassöffnung 17 aufweist. Ein zweites Abgasleitungselement 19, das insbesondere der Mischstrecke 7 zugeordnet ist, umfasst ein Überströmrohr 21, welches eine sich in Figur 1 in vertikaler Richtung erstreckende Längsachse, eine Mantelfläche 23 und ein erstes, geschlossenes Ende 25 aufweist. Ein zweites, offenes Ende 27 geht vorzugsweise einstückig über in ein ebenfalls von dem zweiten Abgasleitungselement 19 umfasstes, bei dem in Figur 1 dargestellten Ausführungsbeispiel gekrümmtes Abgasrohr 29, welches Teil der Mischstrecke 7 ist, und durch welches Abgas zu dem zweiten Abgasnachbehandlungselement 9 strömt.

In der Mantelfläche 23 ist dem geschlossenen Ende 25 benachbart eine Einströmöffnung 31 vorgesehen, die der Einlassöffnung 15 des ersten Abgasleitungselements 13 - in Strömungsrichtung des Abgases gesehen - abgewandt angeordnet ist.

Es zeigt sich, dass das erste Abgasleitungselement 13 hier als Auslasstrichter 33 des Oxidationskatalysators 11 ausgebildet ist. Es ist außerdem hutzenförmig ausgebildet, indem eine durch die Einlassöffnung 15 definierte, gedankliche Ebene, deren Normalenvektor parallel zur Strömungsrichtung des in das erste Abgasleitungselement 13 einströmenden Abgases steht, im Wesentlichen senkrecht auf einer durch die Auslassöffnung definierten, gedanklichen Ebene steht, deren Normalenvektor wiederum parallel zur Strömungsrichtung des ausströmenden Abgases orientiert ist. Das Überströmrohr 21 ragt in den hutzenförmig ausgebildeten Auslasstrichter 33 durch die Auslassöffnung 17 hinein, wobei das geschlossene Ende 25 und die Einströmöffnung 31 in diesem aufgenommen sind.

Im Bereich der Auslassöffnung 17 ist das Überströmrohr 21 formschlüssig in dem Auslasstrichter 33 aufgenommen, wobei die Geometrie der Auslassöffnung 17 vorzugsweise formnegativ zu der Querschnittsform des Überströmrohrs 21 an der Stelle der Auslassöffnung 17 ausgebildet ist. Zusätzlich ist das Überströmrohr 21 im Bereich der Auslassöffnung 17 vorzugsweise mit dem Auslasstrichter 33 verschweißt, sodass sich hier eine form- und stoffschlüssige, dichte Verbindung ergibt. Es ist demnach nicht möglich, dass Abgas aus dem ersten Abgasleitungselement 13 an der Mantelfläche 23 des Überströmrohrs 21 außen vorbei durch die Auslassöffnung 17 austritt. Vielmehr muss alles in das erste Abgasleitungselement 13 einströmende Abgas durch die Einströmöffnung 31 in das Überströmrohr 21 und somit in das zweite Abgasleitungselement 19 eintreten, und durch dieses weiter durch das Abgasrohr 29 zu dem zweiten Abgasnachbehandlungselement 9 strömen.

Die Mischeinrichtung 5 umfasst weiterhin eine an dem ersten Abgasleitungselement 13 befestigte Injektoreinheit 35, durch die ein im Ausgangszustand vorzugsweise flüssiges Reduktionsmittel, vorzugsweise eine wässrige Harnstofflösung, in den Abgasstrom eindüsbar ist.

Es zeigt sich, dass das entlang der durch den Pfeil P gekennzeichneten Richtung einströmende Abgas den Oxidationskatalysator 11 entlang derselben Richtung durchströmt und weiterhin entlang dieser durch die Einlassöffnung 15 in das erste Abgasleitungselement 13, nämlich den Auslasstrichter 33 eintritt. Diese Strömungsrichtung wird auch als erste Richtung bezeichnet. Es zeigt sich weiterhin, dass die Längsachse des Überströmrohrs 21 senkrecht auf der durch den Pfeil P gekennzeichneten, ersten Richtung steht. Das Abgas wird also nicht - wie bei dem bekannten Abgassystem - um ungefähr 90° umgelenkt, bevor es das Überströmrohr 21 erreicht, sondern es strömt dieses vielmehr entlang der ersten Richtung an, in der es auch den Oxidationskatalysator 11 passiert hat. Hierdurch wird ein Druckverlust wirksam vermieden beziehungsweise minimiert.

Es zeigt sich weiterhin, dass die Injektoreinheit 35 so angeordnet und ausgebildet ist, dass das von dieser in den Abgasstrom injizierte Reduktionsmittel stromaufwärts der Einströmöffnung 31 in das erste Abgasleitungselement 13 eingedüst wird. Dies wird im Folgenden noch näher erläutert. In dem Bereich der Eindüsung stromaufwärts der Einströmöffnung 31, in dem Überströmrohr 21 und in der Mischstrecke 7 findet eine Durchmischung des Reduktionsmittels mit dem Abgas statt. Ist das Reduktionsmittel als wässrige Harnstofflösung ausgebildet, wird der Harnstoff weiterhin durch Thermolyse und/oder Hydrolyse zu Ammoniak umgesetzt.

Die Mischung aus Abgas und Reduktionsmittel gelangt durch das Abgasrohr 29 zu dem zweiten Abgasnachbehandlungselement 9, welches als filtertechnisch oder katalytisch wirksames Element ausgebildet ist und bevorzugt zunächst einen Partikelfilter 37, insbesondere einen Dieselpartikelfilter, und - in Strömungsrichtung des Abgases gesehen - unmittelbar hinter diesem eine katalytische Abgasreinigungseinheit, insbesondere einen Katalysator für eine selektive katalytische Reaktion, nämlich einen sogenannten SCR-Katalysator 39, einen Hydrolysekatalysator, einen Oxidationskatalysator und/oder einen Stickoxid-Speicherkatalysator umfasst. Der Partikelfilter 37 ist vorzugsweise mit einem Material beschichtet, welches katalytische Eigenschaften im Sinne einer selektiven katalytischen Reaktion aufweist, sodass bereits in dem Partikelfilter 37 bevorzugt eine Reduktion von Stickoxiden stattfindet, die dann in dem SCR-Katalysator 39 intensiviert und fortgesetzt wird.

Figur 2 zeigt eine Detailvergrößerung des Ausführungsbeispiels des Abgassystems 1 gemäß Figur 1. Gleiche und funktionsgleiche Elemente sind mit gleichen Bezugszeichen versehen, sodass insofern auf die vorangegangene Beschreibung verwiesen wird. Das geschlossene Ende 25 ist vorzugsweise als Deckel des Überströmrohrs 21 ausgebildet beziehungsweise besonders bevorzugt als abschließendes Blechelement auf die Mantelfläche 23 dichtend aufgeschweißt. Eine Wandung 41 des ersten Abgasleitungselements 13 ist in einem - in Strömungsrichtung des Abgases gesehen - hinteren Bereich 43 des geschlossenen Endes 25 nach innen gekrümmt und vorzugsweise dicht auf das geschlossene Ende 25 aufgelegt. In das erste Abgasleitungselement 13 einströmendes Abgas kann daher nicht über das Überströmrohr 21, insbesondere nicht über dessen geschlossenes Ende 25 hinüberströmen, sondern es muss vielmehr um das Überströmrohr 21 seitlich herumströmen, um auf die der Einlassöffnung 15 abgewandte Seite und somit zu der Einströmöffnung 31 zu gelangen.

Diese ist bei dem dargestellten Ausführungsbeispiel als Rechteckspalt ausgebildet, der seine größere Ausdehnung entlang der Längsachse des Überströmrohrs 21 aufweist. Die Einströmöffnung 31 grenzt bei dem dargestellten Ausführungsbeispiel - in Längsrichtung gesehen - unmittelbar an das geschlossene Ende 25 an und erstreckt sich - wiederum in Längsrichtung gesehen - bis zu der Auslassöffnung 17.

Es ist möglich, dass die Einströmöffnung 31 nicht unmittelbar an das geschlossene Ende 25 grenzt, sondern von diesem beabstandet angeordnet ist. Ein solcher Abstand wird aber bevorzugt wesentlich kleiner gewählt, als es einer Längserstreckung der Einströmöffnung 31 entspricht, um eine Totzone im Bereich des geschlossenen Endes 25 zu vermeiden, in der keine effiziente Abgasströmung und insbesondere keine Durchmischung des Abgases mit Reduktionsmittel stattfindet. Es ist auch möglich, dass die Einströmöffnung 31 sich nicht bis zu der Auslassöffnung 17 erstreckt, sondern - in Längsrichtung gesehen - von dieser beabstandet ist. In diesem Fall ist allerdings ein durch die Einströmöffnung 31 gebildeter Strömungswiderstand für das Abgas erhöht, weshalb ein Ausführungsbeispiel bevorzugt wird, bei welchem sich die Einströmöffnung 31 bis zu der Auslassöffnung 17 erstreckt.

Anhand von Figur 2 wird auch deutlich, dass das erste Abgasleitungselement 13 einen - in der ersten Richtung gesehen - in Bezug auf das Überströmrohr 21 der Einlassöffnung 15 abgewandten, - in Strömungsrichtung gesehen - vor der Einströmöffnung 31 angeordneten Strömungsraum 45 aufweist. Von dem Oxidationskatalysator 11 durch die Einlassöffnung 15 einströmendes Abgas wird um das Überströmrohr 21 herumgelenkt, wobei sich die links und rechts an dem Überströmrohr 21 vorbeiströmenden Teilströme in dem Strömungsraum 45 quasi hinter dem Überströmrohr 21 treffen. Das Abgas strömt dann aus dem Strömungsraum 45 über die Einströmöffnung 31 in das Überströmrohr 21 ein.

Die Injektoreinheit 35 ist so ausgerichtet, dass bei dem dargestellten Ausführungsbeispiel 2 von der Injektoreinheit 35 abgesprühte Injektionsstrahlen 47, 47' in den Strömungsraum 45 gerichtet sind. Die Injektionsstrahlen 47, 47' sind jeweils kegelförmig ausgebildet und öffnen sich entlang einer Injektionsrichtung gesehen. Dabei zeigt sich, dass eine Längsachse der Kegel der Injektionsstrahlen 47, 47' in einem spitzen Winkel zu der Längsachse des Überströmrohrs 21 ausgerichtet ist, wobei die Injektionsstrahlen 47, 47' von der Einströmöffnung 31 weg gerichtet sind. Sie sind also nicht in Richtung der Einströmöffnung 31 gerichtet, sondern vielmehr zu der Wandung 41 hin, auf die sie auch zumindest teilweise auftreffen. Der Winkel, den die Injektionsstrahlen 47, 47', insbesondere deren Längsachsen mit der Längsachse des Überströmrohr 21 einschließen, beträgt vorzugsweise höchstens 45°.

In dem Strömungsraum 45 sind hier drei Prallelemente 49, 49', 49" angeordnet, die an dem Überströmrohr 21 und/oder an der Wandung 41 des ersten Abgasleitungselements 13 befestigt, vorzugsweise dort verschweißt sind. Die Prallelemente 49, 49', 49" weisen eine der Injektoreinheit 35 zugewandte Prallfläche 51, 51', 51" auf, wobei deren Normalenvektor im Wesentlichen parallel zu der Längsachse des Überströmrohrs 21 ausgerichtet ist. Die drei Prallelemente 49, 49', 49" sind - in Richtung der Längsachse des Überströmrohrs 21 gesehen - hintereinander und bezüglich ihrer Prallflächen 51, 51', 51" parallel zueinander angeordnet.

Die Injektionsstrahlen 47, 47' treffen nun zumindest teilweise auf die Prallflächen 51, 51', 51", wobei Reduktionsmitteltropfen von den Prallflächen 51, 51', 51" abprallen. Vorzugsweise weisen die Prallelemente 49, 49', 49" mindestens eine Leidenfrost-Temperatur des Reduktionsmittels auf, sodass die Verdampfung und das Abprallen der Reduktionsmittel-Tröpfchen optimiert ist. Dabei werden sie entweder mittelbar durch die Mantelfläche 23 und/oder die Wandung 41 sowie den sie umströmenden Abgasstrom geheizt, oder es ist eine unmittelbare Heizeinrichtung zum Beheizen der Prallelemente 49, 49', 49" vorgesehen. Von den Prallflächen 51, 51', 51" abprallende Reduktionsmittel-Tröpfchen prallen vorzugsweise gegen gegenüberliegende Prallelemente 49, 49', 49", sodass ein Mehrfachabprall erfolgt, wobei jeder Tropfen sukzessive in immer kleinere Tröpfchen zerfällt. Dies und der Wärmeübertrag im Bereich der Prallflächen 51, 51', 51" fördert eine Verdampfung des Reduktionsmittels. Das gleiche gilt für die Kollision des Reduktionsmittels mit der Wandung 41 und einen Abprall von Reduktionsmittel-Tröpfchen von dieser.

Dadurch, dass die Verdampfung des Reduktionsmittels bereits zu einem wesentlichen Teil in dem Strömungsraum 45 vor einem Eintritt in das Überstromrohr 21 stattfindet, wird die Vermischung und gegebenenfalls auch eine Hydrolyse und/oder Thermolyse des Reduktionsmittels deutlich verbessert, wodurch die Mischstrecke 7 insgesamt kürzer gebaut sein kann.

Es zeigt auch, dass die Prallelemente 49, 49', 49" die Einströmöffnung 31 entlang einer Richtung übergreifen, die quer, bei dem dargestellten Ausführungsbeispiel insbesondere senkrecht zu der Längsachse des Überströmrohrs 21 orientiert ist. Abgas, welches das Überströmrohr 21 umströmt, erfährt so durch die Prallelemente 49, 49', 49" nur einen minimalen Strömungswiderstand, sodass ein äußerst geringer Druckverlust durch die Prallelemente 49, 49', 49" gegeben ist.

Es ist möglich, dass in einem dem Strömungsraum 45 abgewandten und der Einlassöffnung 15 zugewandten Bereich des ersten Abgasleitungselements 13 Sonden für Abgasmessungen angeordnet sind. Da der Strömungsraum 45 von diesem Bereich quasi durch das Überstromrohr 21 abgeschirmt ist, sind die Sonden sowie auch der Oxidationskatalysator 11 vor Reduktionsmittelspritzern beziehungsweise Reduktionsmittel-Tropfen geschützt.

Es zeigt sich auch, dass die Injektionsstrahlen 47, 47' senkrecht, höchstens spitzwinklig auf die Prallflächen 51, 51', 51" treffen. Dabei beträgt ein Winkel zwischen den Injektionsstrahlen 47, 47' und den Normalenvektoren der Prallflächen 51, 51', 51" vorzugsweise höchstens 45°. Hierdurch wird ein Abprall der Reduktionsmittel-Tropfen von den Prallflächen 51, 51', 51" effizient unterstützt.

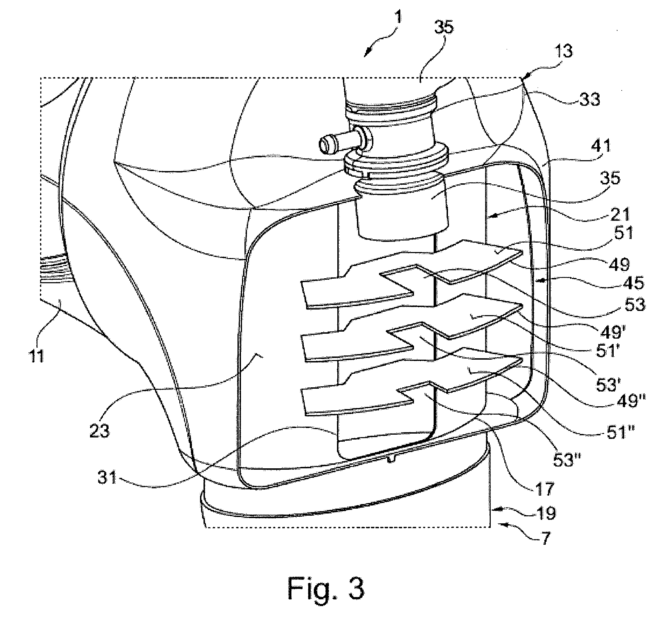

Figur 3 zeigt eine teilweise aufgeschnittene, dreidimensionale Darstellung des Ausführungsbeispiels des Abgassystems 1 gemäß den Figuren 1 und 2. Gleiche und funktionsgleiche Elemente sind mit gleichen Bezugzeichen versehen, sodass insofern auf die vorangegangene Beschreibung verwiesen wird. In Figur 3 ist dargestellt, dass das in das erste Abgasleitungselement hineinragende Überstromrohr 21 formschlüssig in der Auslassöffnung 17 aufgenommen ist. Vorzugsweise ist auch ein Stoffschluss, insbesondere durch Schweißen vorgesehen.

Weiterhin ist in Figur 3 dargestellt, dass die Einströmöffnung 31 als recheckförmiger Spalt ausgebildet ist, der sich - in Längsrichtung gesehen - bis zu der Auslassöffnung 17, nicht jedoch über diese hinaus erstreckt. Vorzugsweise erstreckt er sich von dem in Figur 3 nicht dargestellten geschlossenen Ende 25 bis zu der Auslassöffnung 17. In Figur 3 ist unschwer erkennbar, dass die Einströmöffnung 31 in Richtung der Längsachse des Überströmrohrs 21 eine größere Ausdehnung aufweist als quer zu dieser, sodass sich der durch die Einströmöffnung 31 gebildete Rechteckspalt in Längsrichtung des Überströmrohrs 21 erstreckt.

Anhand von Figur 3 wird auch deutlich, dass das erste Abgasleitungselement 13 das Überströmrohr 21 quasi überkappt, wobei aus dem Oxidationskatalysator 11 in den Auslasstrichter 33 einströmendes Abgas um das Überströmrohr 21 seitlich herum in den Strömungsraum 45 strömt. Es tritt dort durch die Einströmöffnung 31 in das Überströmrohr 21 ein.

Das Überströmrohr 21 ist bei dem dargestellten Ausführungsbeispiel zylindrisch und - im Querschnitt gesehen - oval ausgebildet. Dabei ist die Einströmöffnung 31 - bezüglich der längeren Achse der ovalen Querschnittsfläche - mittig auf der der Einlassöffnung 15 - entlang der kürzeren Achse gesehen - abgewandten Seite des Überströmrohrs 21 angeordnet. Durch die Einströmöffnung 31 einströmendes Abgas bildet so in dem Überströmrohr 21 zwei gegenläufige, stabile Abgasströmungswirbel mit vorzugsweise - in Draufsicht gesehen -jeweils annährender Kreisform aus.

Besonders bevorzugt beträgt ein Verhältnis zwischen der langen Achse des ovalen Querschnitts des Überströmrohrs 21 und dessen kurzer Achse ungefähr zwei. In diesem Fall bildet sich ein besonders stabiler Doppelwirbel aus, der bevorzugt entlang der gesamten Mischstrecke 7, insbesondere auch noch in dem Abgasrohr 29 bis hin zu einem Einlasstrichter des zweiten Abgasnachbehandlungselements 9 erhalten bleibt. Eine - senkrecht zur Längsachse des Überströmrohrs 21 gemessene - Breite der Einströmöffnung 31 ist vorzugsweise kleiner als die kleine Achse der ovalen Querschnittsform des Überströmrohrs 21.

Bei dem in den Figuren 1 bis 3 dargestellten Ausführungsbeispiel ist die Einströmöffnung 31 die einzige in die Mantelfläche 23 eingebrachte Öffnung. Es ist also insgesamt nur eine Einströmöffnung 31 vorgesehen. Das von dem Oxidationskatalysator 11 kommende Abgas muss demnach vollständig um das Überströmrohr 21 herum strömen, bevor es durch die Einströmöffnung 31 in dieses eintreten kann. Hierdurch erhält es bereits beim Umströmen des Überströmrohrs 21 einen Drall, was dazu beiträgt, dass in dem Überströmrohr 21 ein Drall mit hoher kinetischer Energie, insbesondere mit einer Drallzahl von wenigstens 0,3 bezogen auf jeden Einzelwirbel des Doppelwirbels und insbesondere auch mit einer Einlassdrallzahl von wenigstens 0,3 erreicht wird.

Im Folgenden werden die Prallelemente 49, 49', 49" näher erläutert. Diese sind hier als Prallbleche ausgebildet, die die Einströmöffnung 31 senkrecht zu der Längsachse des Überströmrohrs 21 übergreifen und somit parallel zu einer Strömung des Abgases in dem Strömungsraum 45 orientiert sind.

In jeder der Prallflächen 51, 51', 51" ist eine Aussparung 53, 53', 53" vorgesehen, die so angeordnet ist, dass die Injektionsstrahlen 47, 47', die in Figur 3 nicht dargestellt sind, bereichsweise auf die Aussparungen 53, 53', 53" gerichtet sind. Ein Teil des von den Injektionsstrahlen 47, 47' umfassten Reduktionsmittels wird daher ohne Kontakt zu den Prallflächen 51, 51', 51" durch die Aussparungen 53, 53', 53" gesprüht, während ein anderer Teil quasi abgeschält wird, indem er mit den diese umgebenden Prallflächen 51, 51', 51" kollidiert. Dabei zeigt sich, dass von den Aussparungen 53, 53', 53" definierte Durchtrittsflächen für die Injektionsstrahlen 47, 47' in Richtung der Injektionsstrahlen 47, 47', - in Figur 3 also nach unten - von Prallelement zu Prallelement abnehmen. Der Anteil des Reduktionsmittels, der durch die Aussparungen 53, 53', 53" tritt, wird also von Aussparung zu Aussparung geringer. Mithin werden die Injektionsstrahlen 47, 47' durch die Aussparungen 53, 53', 53" abgeschält.

Dabei ist bevorzugt vorgesehen, dass sich insbesondere eine Tiefe der Aussparungen 53, 53', 53", die entlang der ersten Richtung und senkrecht zu der Längsachse des Überströmrohrs 21 gemessen wird, von Prallelement zu Prallelement abnimmt. Alternativ oder zusätzlich ist es möglich, dass auch eine senkrecht zu der ersten Richtung und senkrecht zu der Längsachse des Überströmrohrs 21 gemessene Breite der Aussparungen 53, 53', 53" von Prallelement zu Prallelement abnimmt. Bei dem dargestellten Ausführungsbeispiel nehmen die Durchtrittsflächen ab, indem sowohl die Tiefe als auch die Breite der Aussparungen 53, 53', 53" abnehmen. Hierdurch wird ein besonders effizientes Abschälen der Injektionsstrahlen 47, 47' erreicht. Insgesamt wird damit die Verdampfung und gegebenenfalls auch eine Hydrolyse und/oder Thermolyse des Reduktionsmittels optimiert. Hierzu trägt auch eine Wirbelbildung bei, die sich beim Abschälen der Injektionsstrahlen 47, 47' an den Kanten der Prallelemente 49, 49', 49" ergibt.

Insgesamt wird das Reduktionsmittel bereits in dem Strömungsraum 45 sehr effizient sowohl von den Prallelementen 49, 49', 49", die insoweit als Verdampfungselemente wirken, als auch von der Wandung 41 verdampft und von dem in die Einströmöffnung 31 einströmenden Abgasstrom intensiv verteilt. Diese Verteilung wird weiter intensiviert durch die Ausbildung des stabilen Doppelwirbels in dem Überströmrohr 21. Da die Verdampfung und Durchmischung sehr effizient erfolgt, kann auf eine separate, zusätzliche Mischeinrichtung verzichtet werden. Außerdem kann die Mischstrecke 7 deutlich kürzer als bei bekannten Abgassystemen ausgebildet sein, weil eine frühe und sehr rasche Verdampfung und Homogenisierung des Reduktionsmittels erfolgt.

Anhand von Figur 3 zeigt sich auch, dass sowohl die Injektoreinheit 35 als auch die Prallelemente 49, 49', 49" und schließlich auch die nicht dargestellten Injektionsstrahlen 47, 47' bezüglich einer Symmetrieebene, welche die Einströmöffnung 31 symmetrisch teilt, wobei sowohl die erste Richtung als auch die Längsrichtung des Überströmrohrs 21 in der Symmetrieebene liegen, symmetrisch angeordnet sind. Insbesondere sind die Prallelemente 49, 49', 49" und die Injektionsstrahlen 47, 47' sowie bevorzugt auch die Injektoreinheit 35 spiegelsymmetrisch zu der Symmetrieebene angeordnet. Da auch die sich bildenden Wirbel, insgesamt somit der Doppelwirbel, bezüglich der Symmetrieebene spiegelsymmetrisch ausgebildet ist, ergibt sich insgesamt eine symmetrische Verteilung des Reduktionsmittels in die beiden Wirbel, mithin in den symmetrischen Doppeldrall, was eine besonders intensive Vergleichmäßigung beziehungsweise Homogenisierung der Reduktionsmittelkonzentration in dem Abgasstrom zur Folge hat.

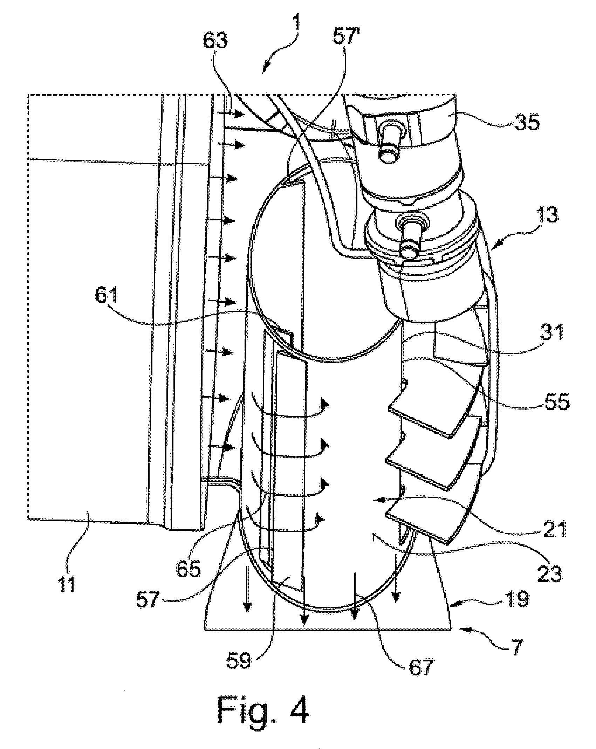

Figur 4 zeigt eine teilweise weggebrochene, dreidimensionale Darstellung eines zweiten Ausführungsbeispiels eines Abgassystems 1. Gleiche und funktionsgleiche Elemente sind mit gleichen Bezugszeichen versehen, sodass insofern auf die vorangegangene Beschreibung verwiesen wird. Das Ausführungsbeispiel gemäß Figur 4 unterscheidet sich von dem Ausführungsbeispiel gemäß den Figuren 1 bis 3 dadurch, dass die Einströmöffnung 31 hier nicht als einzige Einströmöffnung vorgesehen, sondern vielmehr als Haupteinströmöffnung 55 ausgebildet ist. Wie bei dem zuvor beschriebenen Ausführungsbeispiel ist sie der Einlassöffnung 15 abgewandt angeordnet und als Rechteckspalt ausgebildet.

Entlang der ersten Richtung gesehen sind bei dem in Figur 4 dargestellten Ausführungsbeispiel zwei Nebeneinströmöffnungen 57, 57' vorgesehen, die einen geringeren Durchtrittsquerschnitt aufweisen als die Haupteinströmöffnung 55. Auch die Nebeneinströmöffnungen 57, 57' sind in Richtung der Längsachse des Überströmrohrs 21 gesehen mit einer größeren Ausdehnung ausgebildet als quer zu dieser. Insbesondere sind sie ebenfalls als Spalt mit rechteckförmiger Durchtrittsfläche ausgebildet.

Von dem aus dem Oxidationskatalysator 11 heranströmenden Abgas aus gesehen sind die Nebeneinströmöffnungen 57, 57' links und rechts an dem Überströmrohr 21 ausgebildet, wobei sie besonders bevorzugt bezüglich der Symmetrieebene spiegelsymmetrisch angeordnet sind. Durch die Nebeneinströmöffnungen 57, 57' tritt an dem Überströmrohr 21 vorbeiströmendes Abgas im Wesentlichen tangential in das Innere des Überströmrohrs 21 ein, wodurch die Ausbildung des Doppelwirbels unterstützt wird.

Die Nebeneinströmöffnungen 57, 57' senken einen Druckverlust, der ansonsten dadurch gegeben ist, dass das Überströmrohr 21 dem anströmenden Abgas einen Strömungswiderstand entgegensetzt, wobei dieses zunächst vollständig um das Überströmrohr 21 herumströmen muss, bevor es durch die Einströmöffnung 31 hindurchströmen kann. Der Druckverlust sinkt, da bereits ein Teil des Abgasstroms seitlich durch die Nebeneinströmöffnungen 57, 57' in das Überströmrohr 21 eintritt, während der verbleibende Anteil weiter zu der Haupteinströmöffnung 55 strömt. Dabei ist bevorzugt vorgesehen, dass der größere Teil des Abgasstroms durch die Haupteinströmöffnung 55 in das Überströmrohr 21 eintritt, während der geringere Teil des Abgasstroms durch die Nebeneinströmöffnungen 57, 57' einströmt. Dies kann insbesondere durch entsprechende Ausgestaltung der Durchtrittsflächen der Haupteinströmöffnung 55 einerseits und der Nebeneinströmöffnungen 57, 57' andererseits gewährleistet werden. Aufgrund der Senkung des Druckverlusts und des geringeren Anteils von Abgas, der seitlich an dem Überströmrohr 21 vorbeiströmen muss, kann eine - in Richtung der Längsachse des Überströmrohrs 21 gemessene - Bauhöhe und eine senkrecht hierzu und senkrecht zu der ersten Richtung gemessene Breite von außen um das Überströmrohr 21 herumführenden, durch die Wandung 41 des ersten Abgasleitungselements 13 einerseits und die Mantelfläche 23 andererseits gebildeten Strömungskanälen reduziert werden. Insgesamt kann demnach das erste Abgasleitungselement 13 kompakter ausgebildet sein, wobei es das in es hineinragende Überströmrohr 21 enger umgibt.

Um den in dem Überströmrohr 21 ausgebildeten Doppelwirbel optimal zu unterstützen oder zumindest nicht zu schwächen ist es wesentlich, dass das Abgas durch die Nebeneinströmöffnungen 57, 57' tangential einströmt. Dies wird durch mindestens ein Strömungsleitelement sichergestellt.

Im Folgenden wird dies lediglich in Zusammenhang mit der Nebeneinströmöffnung 57 erläutert. Die Nebeneinströmöffnung 57' ist jedoch identisch beziehungsweise spiegelsymmetrisch zu der Nebeneinströmöffnung 57 ausgebildet, sodass alles, was im Folgenden bezüglich der Nebeneinströmöffnung 57 ausgeführt wird, genauso auch für die Nebeneinströmöffnung 57' gilt.

Es sind zwei Strömungsleitelemente 59, 61 vorgesehen, die so angeordnet und ausgebildet sind, dass ein tangentiales Einströmen des Abgases in das Überströmrohr 21 durch die Nebeneinströmöffnung 57 gewährleistet ist.

Das Strömungsleitelement 59 ist hier als - in radialer Richtung gesehen - nach außen umgebogener Bereich der Mantelfläche 23 ausgebildet. Entsprechend ist das Strömungsleitelement 61 als - in radialer Richtung gesehen - nach innen umgebogener Bereich der Mantelfläche 23 ausgebildet. Dabei spricht eine radiale Richtung eine Richtung an, die auf der Längsachse des Überströmrohrs 21 senkrecht steht. Die Strömungsleitelemente 59, 61 sind vorzugsweise parallel zueinander ausgerichtet und sorgen für eine gerichtete, tangentiale Einströmung des Abgases in das Überströmrohr 21.

Die Strömung des Abgases ist in Figur 4 durch Pfeile symbolisiert, wobei eine erste Schar von Pfeilen, von denen einer hier mit dem Bezugszeichen 63 gekennzeichnet ist, andeutet, wie das Abgas von dem Oxidationskatalysator 11 kommend in das erste Abgasleitungselement 13 ein und auf das Überströmrohr 21 zu strömt. Es wird deutlich, dass das Überströmrohr 21 mit seiner langen Querschnittsachse quer, insbesondere senkrecht zu der ersten Richtung des einströmenden Abgases angeordnet ist, während es mit seiner kurzen Querschnittsachse parallel zu der ersten Richtung ausgerichtet ist. Durch eine Schar gekrümmter Pfeile, von denen hier einer mit dem Bezugszeichen 65 gekennzeichnet ist, ist dargestellt, wie ein Teil des Abgasstroms, welcher das Überströmrohr 21 umströmt, durch die Nebeneinströmöffnung 57 tangential in das Überströmrohr 21 einströmt. Nicht dargestellt ist, dass der größere Teil des Abgasstroms das Überströmrohr 21 seitlich bis zu der Haupteinströmöffnung 55 umströmt, wo er schließlich in das Innere des Überströmrohrs 21 eintritt, und wo sich ein stabiler, symmetrischer Doppelwirbel ausbildet.

Durch eine Schar von Pfeilen, von denen einer hier mit dem Bezugszeichen 67 bezeichnet ist, ist weiterhin angedeutet, wie das Abgas durch das zweite Abgasleitungselement 19, insbesondere durch die Mischstrecke 7 und das nicht weiter dargestellte Abgasrohr 29 zu dem ebenfalls nicht dargestellten, zweiten Abgasnachbehandlungselement 9 strömt. Dabei bleibt der symmetrische Doppelwirbel vorzugsweise bis zu einem Einlasstrichter des zweiten Abgasnachbehandlungselements 9 erhalten.

Insgesamt zeigt sich, dass mithilfe des Abgassystems 1 eine besonders effiziente, homogene Durchmischung des Abgases mit Reduktionsmittel möglich ist, wobei dieses besonders effizient verdampft und gegebenenfalls hydrolysiert beziehungsweise thermolysiert wird. Dadurch kann das Abgassystem 1 insgesamt sehr kompakt und mit einer vergleichsweise kurzen Mischstrecke 7 ausgebildet sein. Es zeigt sich noch, dass das in den Figuren dargestellte Abgassystem 1 aufgrund seiner sehr kompakten Anordnung besonders geeignet ist für den Einsatz in einem Kraftfahrzeug, dessen Brennkraftmaschine quer zu einer Längsrichtung des Kraftfahrzeugs angeordnet ist.

## Patentansprüche

1. Abgassystem (1) zur Abgasführung und Abgasnachbehandlung in einem Kraftfahrzeug, mit einem ersten Abgasleitungselement (13), das eine Einlassöffnung (15) und eine Auslassöffnung (17) aufweist, und mit einem zweiten Abgasleitungselement (19), welches ein eine Längsachse aufweisendes Überströmrohr (21) mit einer Mantelfläche (23) und einem ersten, geschlossenen Ende (25) aufweist, wobei in der Mantelfläche (23) dem geschlossenen Ende (25) benachbart eine Einströmöffnung (31) vorgesehen ist, wobei das Überströmrohr (21) in die Auslassöffnung (17) hineinragt und mit seinem geschlossenen Ende (25) und der Einströmöffnung (31) in dem ersten Abgasleitungselement (13) aufgenommen ist, sodass in einer ersten Richtung durch die Einlassöffnung (15) einströmendes Abgas durch die Einströmöffnung (31) in das Überströmrohr (21) einströmen und - in Richtung der Längsachse des Überströmrohrs (21) gesehen - in dem Überströmrohr (21) durch die Auslassöffnung (17) aus dem ersten Abgasleitungselement (13) ausströmen kann, und mit einer an dem ersten Abgasleitungselement (13) befestigten Injektoreinheit (35) zum Einbringen eines Reduktionsmittels in einen durch das erste und das zweite Abgasleitungselement (13, 19) strömenden Abgasstrom,
**dadurch gekennzeichnet, dass**
die Längsachse des Überströmrohrs (21) im Wesentlichen senkrecht auf der ersten Richtung steht, und dass die Injektoreinheit (35) so angeordnet und ausgebildet ist, dass von der Injektoreinheit (35) in das erste Abgasleitungselement (13) eingedüstes Reduktionsmittel mit dem Abgas vermischt durch die Einströmöffnung (31) in das Überströmrohr (21) einströmen kann.

2. Abgassystem (1) nach Anspruch 1,
**dadurch gekennzeichnet, dass**
das Überströmrohr (21) eine Einströmöffnung (31) aufweist, die der Einlassöffnung (15) des ersten Abgasleitungselements (13) abgewandt angeordnet ist, wobei die Einströmöffnung (31) in Richtung der Längsachse des Überströmrohrs (21) eine größere Ausdehnung aufweist als quer zu dieser.

3. Abgassystem (1) nach Anspruch 1 oder 2,
**dadurch gekennzeichnet, dass**
das erste Abgasleitungselement (13) als Auslasstrichter (33) eines Oxidationskatalysators (11) ausgebildet ist.

4. Abgassystem (1) nach einem der vorhergehenden Ansprüche,
**dadurch gekennzeichnet, dass**
das erste Abgasleitungselement (13) einen - in der ersten Richtung gesehen - in Bezug auf das Überströmrohr (21) der Einlassöffnung (15) abgewandten, vor der Einströmöffnung (31) angeordneten Strömungsraum (45) aufweist, wobei die Injektoreinheit (35) so angeordnet und ausgerichtet ist, dass ein Injektionsstrahl (47, 47') in den Strömungsraum (45) gerichtet ist.

5. Abgassystem (1) nach Anspruch 4,
**dadurch gekennzeichnet, dass**
der Injektionsstrahl (47, 47') annährend parallel oder höchstens spitzwinklig zu der Längsachse des Überströmrohrs (21) ausgerichtet ist.

6. Abgassystem (1) nach Anspruch 4 oder 5,
**dadurch gekennzeichnet, dass**
in dem Strömungsraum (45) mindestens ein im Wesentlichen plattenförmiges Prallelement (49, 49', 49") an dem Überströmrohr (21) und/oder an dem ersten Abgasleitungselement (13) befestigt ist.

7. Abgassystem (1) nach Anspruch 6,
**dadurch gekennzeichnet, dass**
das Prallelement (49, 49', 49") eine der Injektoreinheit (35) zugewandte Prallfläche (51, 51', 51 ") aufweist, deren Normalenvektor im Wesentlichen parallel zu der Längsachse des Überströmrohrs (21) ausgerichtet ist.

8. Abgassystem (1) nach Anspruch 6 oder 7,
**dadurch gekennzeichnet, dass**
das Prallelement (49, 49', 49") die Einströmöffnung (31) entlang einer Richtung übergreift, die quer zu der Längsachse orientiert ist.

9. Abgassystem (1) nach einem der Ansprüche 6 bis 8,
**gekennzeichnet durch**
dass eine Mehrzahl von Prallelementen (49, 49', 49") vorgesehen ist, wobei die Prallelemente (49, 49', 49") - in Richtung der Längsachse des Überströmrohrs (21) gesehen - hintereinander angeordnet sind..

10. Abgassystem (1) nach Anspruch 9,
**dadurch gekennzeichnet, dass**
die Prallelemente bezüglich ihrer Prallflächen (51, 51', 51") parallel zueinander angeordnet sind.

11. Abgassystem (1) nach Anspruch 9 oder 10,
**dadurch gekennzeichnet, dass**
die Prallelemente (49, 49', 49") jeweils eine Aussparung (53, 53', 53") in der Prallfläche (51, 51', 51 ") aufweisen, wobei die Aussparung (53, 53', 53") so angeordnet ist, dass der Injektionsstrahl (47, 47') bereichsweise auf die Aussparung (53, 53', 53") gerichtet ist.

12. Abgassystem (1) nach einem der vorhergehenden Ansprüche,
**dadurch gekennzeichnet, dass**
die Injektoreinheit (35) so angeordnet und ausgerichtet ist, dass der Injektionsstrahl (47, 47') in Bezug auf eine durch die erste Richtung und die Längsrichtung definierte, die Einströmöffnung (31) symmetrisch teilende Symmetrieebene symmetrisch angeordnet ist.

13. Abgassystem (1) nach einem der Ansprüche 1, und 3 bis 12,
**gekennzeichnet durch**
eine der Einlassöffnung (15) des ersten Abgasleitungselements (13) abgewandt angeordnete Haupteinströmöffnung (55), und mindestens eine Nebeneinströmöffnung (57, 57') in der Mantelfläche (23) des Überströmrohrs (21), die - entlang der ersten Richtung gesehen - seitlich zu der Haupteinströmöffnung (55) angeordnet ist.

14. Abgassystem nach Anspruch 13,
**dadurch gekennzeichnet, dass**
die Nebeneinströmöffnung (57, 57'), in Richtung der Längsachse des Überströmrohrs (21) eine größere Ausdehnung als quer zu dieser aufweist, wobei die Nebeneinströmöffnung (57, 57') als Spalt mit rechteckförmiger Durchtrittsfläche ausgebildet ist.

15. Abgassystem (1) nach Anspruch 13 oder 14,
**gekennzeichnet durch**
zwei Nebeneinströmöffnungen (57, 57'), die in Bezug auf eine **durch** die erste Richtung und die Längsachse definierte, die Haupteinströmöffnung (55) symmetrisch teilende Symmetrieebene spiegelsymmetrisch angeordnet sind.

16. Abgassystem (1) nach Anspruch 15 und einem der Ansprüche 13 oder 14,
**dadurch gekennzeichnet, dass**
die mindestens eine Nebeneinströmöffnung (57, 57') mindestens ein Strömungsleitelement (59, 61) aufweist, durch welches Abgas im Wesentlichen tangential in das Überströmrohr (21) leitbar ist, wobei das Strömungsleitelement (59,61) vorzugsweise als - in radialer Richtung gesehen - nach außen und/oder nach innen umgebogener Bereich der Mantelfläche (23) ausgebildet ist.

## Claims

1. Exhaust system (1) for ducting and treating exhaust gas in a motor vehicle, the system comprising a first exhaust pipe element (13) having an inlet opening (15) and an outlet opening (17), and further comprising a second exhaust pipe element (19) having an overflow pipe (21) with a longitudinal axis, a circumferential surface (23) and a first, closed end (25), wherein an inflow opening (31) is provided in the circumferential surface (23) adjacent to the closed end (25), wherein the overflow pipe (21) projects into the outlet opening (17) and is accommodated with its closed end (25) and the inflow opening (31) in the first exhaust pipe element (13), so that exhaust gas flowing in through the inlet opening (15) in a first direction can flow into the overflow pipe (21) through the inflow opening (31) and - as viewed in the direction of the longitudinal axis of the overflow pipe (21) - flow in the overflow pipe (21) through the outlet opening (17) out of the first exhaust pipe element (13), and the system further comprising an injector unit (35) mounted in the first exhaust pipe element (13) for introducing a reducing agent into the exhaust gas stream flowing through the first and the second exhaust pipe element (13, 19),
**characterised in that**
the longitudinal axis of the overflow pipe (21) extends substantially perpendicular to the first direction, and **in that** the injector unit (35) is arranged and designed such that reducing agent jetted by the injector unit (35) into the first exhaust pipe element (13), mixed with the exhaust gas, can flow through the inflow opening (31) into the overflow pipe (21).

2. Exhaust system (1) according to claim 1,
**characterised in that**
the overflow pipe (21) has an inflow opening (31) which is remote from the inlet opening (15) of the first exhaust pipe element (13), the inflow opening (31) having a larger dimension in the direction of the longitudinal axis of the overflow pipe (21) than in the direction transverse thereto.

3. Exhaust system (1) according to claim 1 or 2,
**characterised in that**
the first exhaust pipe element (13) is designed as an outlet cone (33) of an oxidising converter (11).

4. Exhaust system (1) according to any of the preceding claims,
**characterised in that**
the first exhaust pipe element (13) comprises a flow chamber (45), which is - as viewed in the first direction - remote from the inlet opening (15) with respect to the overflow pipe (21) and located upstream of the inflow opening (31), the injector unit (35) being arranged and oriented such that an injection jet (47, 47') is directed into the flow chamber (45).

5. Exhaust system (1) according to claim 4,
**characterised in that**
the injection jet (47, 47') is oriented approximately parallel or at most at an acute angle to the longitudinal axis of the overflow pipe (21).

6. Exhaust system (1) according to claim 4 or 5,
**characterised in that**
in the flow chamber (45) at least one substantially plate-shaped baffle element (49, 49', 49") is mounted on the overflow pipe (21) and/or on the first exhaust pipe element (13).

7. Exhaust system (1) according to claim 6,
**characterised in that**
the baffle element (49, 49', 49") has a baffle surface (51, 51', 51 "), which faces the injector unit (35) and the normal vector of which is oriented substantially parallel to the longitudinal axis of the overflow pipe (21).

8. Exhaust system (1) according to claim 6 or 7,
**characterised in that**
the baffle element (49, 49', 49") laps the inflow opening (31) along a direction which is oriented transversely to the longitudinal axis.

9. Exhaust system (1) according to any of claims 6 to 8,
**characterised in that**
a plurality of baffle elements (49, 49', 49") is provided, the baffle elements (49, 49', 49") - as viewed in the direction of the longitudinal axis of the overflow pipe (21) - being arranged one behind the other.

10. Exhaust system (1) according to claim 9,
**characterised in that**
the baffle elements are arranged parallel to one another in respect of their baffle surfaces (51, 51', 51").

11. Exhaust system (1) according to claim 9 or 10,
**characterised in that**
each of the baffle elements (49, 49', 49") has a recess (53, 53', 53") in its baffle surface (51, 51', 51 "), the recess (53, 53', 53") being arranged such that the injection jet (47, 47') is directed towards the recess (53, 53', 53") in some regions.

12. Exhaust system (1) according to any of the preceding claims,
**characterised in that**
the injector unit (35) is arranged and oriented such that the injection jet (47, 47') is arranged symmetrically with regard to a plane of symmetry defined by the first direction and the longitudinal direction and dividing the inflow opening (31) symmetrically.

13. Exhaust system (1) according to any of claims 1 and 3 to 12,
**characterised by**
a main inflow opening (55) remote from the inlet opening (15) of the first exhaust pipe element (13) and at least one secondary inflow opening (57, 57') in the circumferential surface (23) of the overflow pipe (21), which secondary inflow opening (57, 57') is - as viewed in the first direction - arranged laterally with regard to the main inflow opening (55).

14. Exhaust system (1) according to claim 13,
**characterised in that**
the secondary inflow opening (57, 57') has a larger dimension in the direction of the longitudinal axis of the overflow pipe (21) than in the direction transverse thereto, the secondary inflow opening (57, 57') being designed as a gap with a rectangular passage area.

15. Exhaust system (1) according to claim 13 or 14,
**characterised by**
two secondary inflow openings (57, 57'), which are arranged mirror-symmetrically with regard to a plane of symmetry defined by the first direction and the longitudinal direction and dividing the main inflow opening (55) symmetrically.

16. Exhaust system (1) according to claim 15 and one of claims 13 or 14,
**characterised in that**
the at least one secondary inflow opening (57, 57') comprises at least one flow directing element (59, 61), by means of which exhaust gas can be directed into the overflow pipe (21) in a substantially tangential direction, the flow directing element (59, 61) being preferably designed as a region of the circumferential surface (23) which is bent outwards and/or inwards - as viewed in the radial direction.

## Revendications

1. Système de gaz d'échappement (1) destiné à acheminer et traiter les gaz d'échappement dans un véhicule automobile, comprenant un premier élément (13) de tuyau de gaz d'échappement qui présente une ouverture d'admission (15) et une ouverture d'évacuation (17), et comprenant un second élément (19) de conduite de gaz d'échappement qui présente une conduite de retour (21) ayant un axe longitudinal dotée d'une surface d'enveloppe (23) et une première extrémité (25) fermée, dans la surface d'enveloppe (23) étant prévu un orifice d'admission (31) à proximité de l'extrémité fermée (25), la conduite de retour (21) débouchant dans l'ouverture d'évacuation (17) et étant logé avec son extrémité fermée (25) et l'orifice d'admission (31) dans le premier élément (13) de conduite de gaz d'échappement, de sorte que dans une première direction le gaz d'échappement s'écoulant à travers l'ouverture d'admission (15) puisse s'écouler à travers l'orifice d'admission (31) dans la conduite de retour (21) et observé dans la direction de l'axe longitudinal de la conduite de retour (21), dans la conduite de retour (21) puisse sortir à travers l'ouverture d'évacuation (17) à partir du premier élément (13) de conduite de gaz d'échappement, et comprenant une unité d'injecteur (35) fixée sur le premier élément (13) de conduite de gaz d'échappement destiné à introduire un moyen de réduction dans un flux de gaz d'échappement s'écoulant à travers le premier et le second élément de conduite de gaz d'échappement (13, 19), **caractérisé en ce que** l'axe longitudinal de la conduite de retour (21) est essentiellement vertical dans la première direction et **en ce que** l'unité d'injecteur (35) est disposé et est conçu de telle sorte qu'à partir de l'unité d'injecteur (35) le moyen de réduction injecté dans le premier élément (13) de conduite de gaz d'échappement mélangé au gaz d'échappement puisse s'écouler par l'orifice d'admission (31) dans la conduite de retour (21).

2. Système de gaz d'échappement (1) selon la revendication 1, **caractérisé en ce que** la conduite de retour (21) présente un orifice d'admission (31) qui est disposé en regard de l'ouverture d'admission (15) du premier élément (13) de conduite de gaz d'échappement, l'orifice d'admission (31) dans la direction de l'axe longitudinal de la conduite de retour (21) présentant une dilatation supérieure par rapport à transversalement à celle-ci.

3. Système de gaz d'échappement (1) selon la revendication 1 ou 2, **caractérisé en ce que** le premier élément (13) de conduite de gaz d'échappement est conçu en tant que trémie d'évacuation (33) d'un catalyseur d'oxydation (11).

4. Système de gaz d'échappement (1) selon l'une quelconque des revendications précédentes, **caractérisé en ce que** le premier élément (13) de conduite de gaz d'échappement présente - dans la première direction - par rapport à la conduite de retour (21) de l'ouverture d'admission (15), un espace d'écoulement (45) disposé en regard, en amont de l'orifice d'admission (31), l'unité d'injecteur (35) étant disposé et conçu de telle sorte qu'un jet (47, 47') d'injection soit dirigé dans l'espace d'écoulement (45).

5. Système de gaz d'échappement (1) selon la revendication 4, **caractérisé en ce que** le jet d'injection (47, 47') est orienté approximativement parallèle ou au plus selon un angle aigu par rapport à l'axe longitudinal de la conduite de retour (21).

6. Système de gaz d'échappement (1) selon la revendication 4 ou 5, **caractérisé en ce que** dans l'espace d'écoulement (45) au moins un élément (49, 49', 49") de chicane lamellaire est fixé sur la conduite de retour (21) et/ou sur le premier élément (13) de conduite de gaz d'échappement.

7. Système de gaz d'échappement (1) selon la revendication 6, **caractérisé en ce que** l'élément (49, 49', 49") de chicane présente une surface de chicane (51, 51', 51") orientée vers l'unité d'injecteur (35) dont le vecteur de normale est orienté essentiellement parallèlement à l'axe longitudinal de la conduite de retour (21).

8. Système de gaz d'échappement (1) selon la revendication 6 ou la revendication 7, **caractérisé en ce que** l'élément (49, 49', 49") de chicane fait saillie le long d'une direction qui est orientée transversalement par rapport à l'axe longitudinal.

9. Système de gaz d'échappement (1) selon l'une quelconque des revendications 6 à 8, **caractérisé en ce qu'**il est prévu une pluralité des éléments (49, 49', 49") de chicane, lesdits éléments (49, 49', 49") de chicane, étant disposés les uns derrière les autres - lorsqu'ils sont observés en direction de l'axe longitudinal de la conduite de retour (21).

10. Système de gaz d'échappement (1) selon la revendication 9, **caractérisé en ce que** les éléments de chicane sont parallèles les uns aux autres par rapport à leurs surfaces (51, 51', 51") de chicane.

11. Système de gaz d'échappement (1) selon la revendication 9 ou la revendication 10, **caractérisé en ce que** les éléments (49, 49', 49") de chicane présentent respectivement un évidemment (53, 53', 53") dans la surface (51, 51', 51") de chicane), l'évidemment (53, 53', 53") étant aménagé de telle sorte que le jet d'injection (47, 47') soit orienté vers certains endroits de l'évidemment (53, 53', 53").

12. Système de gaz d'échappement (1) selon l'une quelconque des revendications précédentes, **caractérisé en ce que** l'unité d'injection (35) est disposée et conçue de telle sorte que le jet d'injection (47, 47') soit disposé symétriquement par rapport à un plan de symétrie défini par la première direction et la direction longitudinale séparant symétriquement l'orifice d'admission (31).

13. Système de gaz d'échappement (1) selon l'une quelconque des revendications 1, et de 3 à 12, **caractérisé par** une ouverture d'admission principale (55) disposée en regard de l'ouverture d'admission (15) du premier élément (13) de conduite de gaz d'échappement, et au moins une ouverture d'admission secondaire (57, 57') dans la surface d'enveloppe (23) de la conduite de retour (21), qui est disposée - lorsqu'elle est observée le long de la première direction - latéralement par rapport à l'ouverture d'admission principale (55).

14. Système de gaz d'échappement selon la revendication 13, **caractérisé en ce que** l'ouverture d'admission secondaire (57, 57'), en direction de l'axe longitudinal de la conduite de retour (21) présente une dilatation supérieure par rapport à transversalement à celle-ci, l'ouverture d'admission secondaire (57, 57') étant formée en tant qu'interstice ayant une surface de passage rectangulaire.

15. Système de gaz d'échappement (1) selon la revendication 13 ou la revendication 14, **caractérisé par** deux ouvertures d'admission secondaires (57, 57') qui sont disposés par rapport à un plan de symétrie défini par la première direction et la direction longitudinale séparant de manière symétrique en miroir l'ouverture d'admission principale (55).

16. Système de gaz d'échappement (1) selon la revendication 15 et selon l'une quelconque des revendications 13 ou 14, **caractérisé en ce que** l'au moins une ouverture d'admission secondaire (57, 57') présente au moins un élément de guide d'écoulement (59, 61) par lequel le gaz d'échappement peut être dirigé essentiellement tangentiellement dans la conduite de retour (21), l'élément de guide d'écoulement (59, 61) est conçu de préférence - lorsqu'il est dans la direction radiale - en tant que zone recourbée vers l'extérieur et/ou vers l'intérieur de la surface d'enveloppe (23).
